# EUROPEAN PATENT APPLICATION

(11) **EP 4 450 481 A1**
(43) Date of publication of application: **23.10.2024**
(21) Application number: 22922037.1
(22) Date of filing: 01.11.2022
(51) Int. Cl.: C05F 11/02, C05G 5/20

(54) **LIQUID HUMIC ACID, AND METHOD FOR PRODUCING LIQUID HUMIC ACID**

(30) Priority: 21.01.2022 JP 2022007794
(71) Applicant: Denka Company Limited, Tokyo 103-8338 (JP)
(72) Inventor: OKAWA, Takashi, Tokyo 103-8338 (JP); HONDA, Kazuma, Tokyo 103-8338 (JP); IINO, Toju, Tokyo 103-8338 (JP)
(74) Representative: Gulde & Partner
(86) International application number: PCT/JP2022/040923
(87) International publication number: WO 2023/139886

(57) **Abstract**

A liquid humic substance of the present invention is a liquid humic substance having, in separating the liquid humic substance into a precipitated part and a soluble part by regulating the liquid humic substance to have a pH of 1 by adding hydrochloric acid, a total organic carbon concentration A mg/L of the precipitated part and a total organic carbon concentration B mg/L of the soluble part that provide a value of B/A × 100 of 15 to 100, and the production method thereof includes (1) a step of adding 80 to 160 parts by mass of nitric acid on anhydrous basis to 100 parts by mass of low rank coal, (2) a step of reacting a mixture obtained in the step (1) under condition of 70 to 95°C for 2 to 6 hours, so as to prepare a crude humic substance, (3) a step of adding water and an alkali to the crude humic substance to regulate the crude humic substance to have a pH of 6 to 10, (4) a step of adding water to make a solid-liquid ratio of 1/3 or more, (5) a step of extracting under condition of a liquid temperature of 40 to 95°C for 0.5 to 24 hours, and (6) a step of subjecting a humic substance extracted liquid obtained in the step (5) to solid-liquid separation, so as to provide the liquid humic substance. The present invention can provide a liquid humic substance that has a growth promotion effect on crop plants.

## Description

### Technical Field

The present invention relates to a liquid humic substance and a method of producing a liquid humic substance.

### Background Art

A humic substance is a natural high molecular weight organic matter existing in the soil or the land water. Examples of a humic substance include a humic substance contained in lignite coal or peat coal, and a natural humic substance derived from a metabolic product of bacterial groups or a metabolic product of animals and plants.

Examples of an industrially produced humic substance include a humic substance obtained through oxidative decomposition of low rank coal, such as lignite coal (PTL 1), and a synthetic matter, such as an alkali metal salt or an alkaline earth metal salt of an oxidative decomposition product thereof (PTLs 2 and 3).

A humic substance has been said to have an effect of growth promotion and the like of plants (NPLs 1 and 2), and a humic substance has been proposed for use as a fertilizer. A technique of liquefying a humic substance through extraction has also been proposed (PTLs 4 and 5).

A humic substance can be fractionated into humin, which is an insoluble fraction, a humic acid, which is soluble in alkali and insoluble in acid, and a fulvic acid, which is soluble in acid. The difference between a humic acid and a fulvic acid is defined only by the difference in solubility at pH of 1.0 (NPL 3). In the present embodiment, the humic acid fraction and the fulvic acid fraction, which have substantially continuous characteristics, are generically referred to as a humic substance.

In the case where the humic substance is used as a fertilizer, it is preferred to use in combination with fertilizer components, such as nitrogen, phosphoric acid, and potassium. For using the humic substance as a liquid fertilizer, there have been proposals for an effective extraction method of the humic substance (PTL 6), and a humic substance-containing liquid three-element fertilizer having a three-element fertilizer added thereto (PTL 7). A material that is less likely to cause coprecipitation with a fertilizer has also been proposed (PTL 8).

### Citation List

### Patent Literatures

PTL 1: JP 40-14122 B
PTL 2: JP 51-72987 A
PTL 3: JP 60-18565 A
PTL 4: JP 2005-89615 A
PTL 5: JP 2007-196172 A
PTL 6: JP 2017-71522 A
PTL 7: JP 2018-58721 A
PTL 8: JP 2018-95555 A

### Non-patent Literatures

NPL 1: Akashi, et al., Japanese Journal of Soil Science and Plant Nutrition, vol. 46, No. 5, pp. 175-179
NPL 2: Yamada, et al., Japanese Journal of Soil Science and Plant Nutrition, vol. 73, No. 6, pp. 777-781
NPL 3: Fujitake, Humic Substances Research vol.3, pp. 1-9

### Summary of Invention

### Technical Problem

While the humic substance has been used as a fertilizer, there is a demand of further enhancement of the effect of the humic substance as a fertilizer in recent years. Under the circumstances, an object of the present invention is to provide a liquid humic substance that has a growth promotion effect on crop plants, and a method of producing the liquid humic substance.

### Solution to Problem

The present inventors have made earnest studies for achieving the object, and have found that a fulvic acid has a short-term growth promotion effect, and a humic acid has a long-term growth promotion effect. It has also been found that the balance between the short-term growth promotion effect and the long-term growth promotion effect can be allowed to be more favorable for the growth of crop plants, i.e., the effect of the humic substance as a fertilizer can be further improved, by allowing the proportion of the total organic carbon concentration of the soluble part containing a fulvic acid with respect to the total organic carbon concentration of the precipitated part containing a humic acid in the humic substance having a pH regulated to 1 to be within the prescribed range, and thus the present invention has been completed. The present invention includes the following.
[1] A liquid humic substance having, in separating the liquid humic substance into a precipitated part and a soluble part by regulating the liquid humic substance to have a pH of 1 by adding hydrochloric acid, a total organic carbon concentration A mg/L of the precipitated part and a total organic carbon concentration B mg/L of the soluble part that provide a value of B/A × 100 of 15 to 100.
[2] A liquid humic substance containing a humic acid and a fulvic acid, and having, in separating the liquid humic substance into a precipitated part containing the humic acid and a soluble part containing the fulvic acid by regulating the liquid humic substance to have a pH of 1 by adding hydrochloric acid, a total organic carbon concentration A mg/L of the precipitated part and a total organic carbon concentration B mg/L of the soluble part that provide a value of B/A × 100 of 15 to 100.
[3] A liquid humic substance containing a humic acid and a fulvic acid, and having a total organic carbon concentration C mg/L of the humic acid and a total organic carbon concentration D mg/L of the fulvic acid that provide a value of D/C × 100 of 15 to 100.
[4] The liquid humic substance according to the item [2] or [3], wherein the liquid humic substance has a total total organic carbon concentration of the total organic carbon concentration of the humic acid and the total organic carbon concentration of the fulvic acid of 4,000 to 150,000 mg/L.
[5] The liquid humic substance according to any one of the items [2] to [4], wherein the liquid humic substance has a total organic carbon concentration of the humic acid of 2,000 to 148,000 mg/L.
[6] The liquid humic substance according to any one of the items [2] to [5], wherein the liquid humic substance has a total organic carbon concentration of the fulvic acid of 2,000 to 50,000 mg/L.
[7] The liquid humic substance according to any one of the items [1] to [6], wherein the liquid humic substance has a pH of 6 to 10.
[8] The liquid humic substance according to any one of the items [1] to [7], wherein the liquid humic substance is diluted with water.
[9] A method of producing the liquid humic substance according to any one of the items [1] to [7], including
   (1) a step of adding 80 to 160 parts by mass of nitric acid on anhydrous basis to 100 parts by mass of low rank coal,
   (2) a step of reacting a mixture obtained in the step (1) under condition of 70 to 95°C for 2 to 6 hours, so as to prepare a crude humic substance,
   (3) a step of adding water and an alkali to the crude humic substance to regulate the crude humic substance to have a pH of 6 to 10,
   (4) a step of adding water to make a solid-liquid ratio of 1/3 or more,
   (5) a step of extracting under condition of a liquid temperature of 40 to 95°C for 0.5 to 24 hours, and
   (6) a step of subjecting a humic substance extracted liquid obtained in the step (5) to solid-liquid separation, so as to provide the liquid humic substance.

### Advantageous Effects of Invention

The present invention can provide a liquid humic substance that has a growth promotion effect on crop plants, and a method of producing the liquid humic substance.

### Brief Description of Drawings

Fig. 1 is the FT-IR spectrum of the humic substance solution of Example 1.
Fig. 2 is the ¹³C-NMR spectrum of the humic substance solution of Example 1.

### Description of Embodiments

### [Liquid Humic Substance]

Embodiments of the liquid humic substance according to the present invention will be described below. The liquid humic substance of the present invention is not limited thereto, and various modifications can be made therein unless deviating from the substance thereof.

### [Value of B/A × 100]

The liquid humic substance according to the present embodiment has, in separating the liquid humic substance into a precipitated part and a soluble part by regulating the liquid humic substance to have a pH of 1 by adding hydrochloric acid, a total organic carbon concentration A mg/L of the precipitated part and a total organic carbon concentration B mg/L of the soluble part that provide a value of B/A × 100 of 15 to 100. In the case where the value of B/A × 100 is less than 15, the short-term growth promotion effect may be insufficient, and the growth promotion effect on crop plants of the liquid humic substance may be decreased, in some cases. In the case where the value of B/A × 100 exceeds 100, the long-term growth promotion effect may be insufficient, and the growth promotion effect on crop plants of the liquid humic substance may be decreased, in some cases. From this standpoint, the value of B/A × 100 is preferably 20 to 80. In consideration of the state of soil where the liquid humic substance is used, the value of B/A × 100 may be preferably 15 to 60, and more preferably 20 to 50, and may be preferably 50 to 100, and more preferably 60 to 90. The total organic carbon concentration of the precipitated part and the total organic carbon concentration of the soluble part can be measured by the method described in the examples described later.

The liquid humic substance according to another embodiment of the present embodiment is a liquid composition containing a humic acid and a fulvic acid, and has, in separating the liquid humic substance into a precipitated part containing the humic acid and a soluble part containing the fulvic acid by regulating the liquid humic substance to have a pH of 1 by adding hydrochloric acid, a total organic carbon concentration A mg/L of the precipitated part and a total organic carbon concentration B mg/L of the soluble part that provide a value of B/A × 100 of 15 to 100. In the case where the value of B/A × 100 is less than 15, the short-term growth promotion effect by the fulvic acid may be insufficient, and the growth promotion effect on crop plants of the liquid humic substance may be decreased, in some cases. In the case where the value of B/A × 100 exceeds 100, the long-term growth promotion effect by the humic acid may be insufficient, and the growth promotion effect on crop plants of the liquid humic substance may be decreased, in some cases. From this standpoint, the value of B/A × 100 is preferably 20 to 80. In consideration of the state of soil where the liquid humic substance is used, the value of B/A × 100 may be preferably 15 to 60, and more preferably 20 to 50, and may be preferably 50 to 100, and more preferably 60 to 90. The total organic carbon concentration of the precipitated part and the total organic carbon concentration of the soluble part can be measured by the method described in the examples described later.

In the case where the organic matter contained in the precipitated part contains a humic acid as a major component, the total organic carbon concentration of the precipitated part is substantially the same as the total organic carbon concentration of the humic acid, and in the case where the organic matter contained in the soluble part contains a fulvic acid as a major component, the total organic carbon concentration of the soluble part is substantially the same as the total organic carbon concentration of the fulvic acid. As described above, the humic substance can be fractionated into humin, which is an insoluble fraction, a humic acid, which is soluble in alkali and insoluble in acid, and a fulvic acid, which is soluble in acid. Therefore, the precipitated part in the liquid humic substance can be assumed to be a humic acid, and the soluble part therein can be assumed to be fulvic acid. Accordingly, the total organic carbon concentration of the precipitated part in the liquid humic substance according to the present embodiment can be assumed to be the total organic carbon concentration of the humic acid in the liquid humic substance according to the present embodiment, and the total organic carbon concentration of the soluble part in the liquid humic substance according to the present embodiment can be assumed to be the total organic carbon concentration of the fulvic acid in the liquid humic substance according to the present embodiment.

Consequently, the total organic carbon concentration C mg/L of the humic acid in the liquid humic substance according to the present embodiment and the total organic carbon concentration D mg/L of the fulvic acid therein provide a value of D/C × 100 of 15 to 100, and preferably 20 to 80. In consideration of the state of soil where the liquid humic substance is used, the value of D/C × 100 may be preferably 15 to 60, and more preferably 20 to 50, and may be preferably 50 to 100, and more preferably 60 to 90.

### (Total Organic Carbon Concentration of Soluble Part)

The total organic carbon concentration of the soluble part in the liquid humic substance according to the present embodiment is preferably 2,000 to 50,000 mg/L. In the case where the total organic carbon concentration of the soluble part is 2,000 to 50,000 mg/L, the short-term growth promotion effect on crop plants of the liquid humic substance can be further enhanced. From this standpoint, the total organic carbon concentration of the soluble part is more preferably 2,000 to 45,000 mg/L, and further preferably 2,500 to 40,000 mg/L.

### (Total Organic Carbon Concentration of Fulvic Acid)

The total organic carbon concentration of the fulvic acid in the liquid humic substance according to the present embodiment is preferably 2,000 to 50,000 mg/L. In the case where the total organic carbon concentration of the fulvic acid is 2,000 to 50,000 mg/L, the short-term growth promotion effect on crop plants of the liquid humic substance can be further enhanced. From this standpoint, the total organic carbon concentration of the fulvic acid is more preferably 2,000 to 45,000 mg/L, and further preferably 2,500 to 40,000 mg/L. The total organic carbon concentration of the fulvic acid in the liquid humic substance is substantially the same as the total organic carbon concentration of the soluble part therein.

### (Total Organic Carbon Concentration of Humic Acid)

The total organic carbon concentration of the humic acid in the liquid humic substance according to the present embodiment is preferably 2,000 to 148,000 mg/L. In the case where the total organic carbon concentration of the humic acid is 2,000 to 148,000 mg/L, the long-term growth promotion effect on crop plants of the liquid humic substance can be further enhanced. From this standpoint, the total organic carbon concentration of the humic acid is more preferably 2,500 to 128,000 mg/L, and further preferably 3,000 to 117,500 mg/L. The total organic carbon concentration of the humic acid in the liquid humic substance is substantially the same as the total organic carbon concentration of the precipitated part therein.

### (Total Organic Carbon Concentration of Liquid Humic Substance)

The total organic carbon concentration of the liquid humic substance according to the present embodiment is preferably 4,000 to 150,000 mg/L. In the case where the total organic carbon concentration of the liquid humic substance is 4,000 to 150,000 mg/L, the short-term and long-term growth promotion effects on crop plants of the liquid humic substance can be further enhanced. From this standpoint, the total organic carbon concentration of the liquid humic substance is preferably 5,000 to 130,000 mg/L, and more preferably 5,000 to 120,000 mg/L.

### (Total of Total Organic Carbon Concentration of Humic Acid and Total Organic Carbon Concentration of Fulvic Acid)

The total of the total organic carbon concentration of the humic acid and the total organic carbon concentration of the fulvic acid in the liquid humic substance according to the present embodiment is preferably 4,000 to 150,000 mg/L. In the case where the total of the total organic carbon concentration of the humic acid and the total organic carbon concentration of the fulvic acid in the liquid humic substance is preferably 4,000 to 150,000 mg/L, the short-term and long-term growth promotion effects on crop plants of the liquid humic substance can be further enhanced. From this standpoint, the total of the total organic carbon concentration of the humic acid and the total organic carbon concentration of the fulvic acid in the liquid humic substance is more preferably 5,000 to 130,000 mg/L, and further preferably 5,000 to 120,000 mg/L. The total of the total organic carbon concentration of the humic acid and the total organic carbon concentration of the fulvic acid in the liquid humic substance is substantially the same as the total organic carbon concentration of the liquid humic substance.

### (pH)

The pH of the liquid humic substance according to the present embodiment is preferably 6 to 10. In the case where the pH of the liquid humic substance is 6 to 10, the humic acid and the fulvic acid can be prevented from being precipitated in the liquid humic substance. In the case where the pH of the liquid humic substance is 6 to 10, furthermore, the liquid humic substance can be handled more safely, and the solubility of the liquid humic substance and fertilizer components can be further improved. From this standpoint, the pH of the liquid humic substance according to the present embodiment is more preferably 6.5 to 8, and further preferably 6.5 to 7.5. The pH of the liquid humic substance can be measured by the method described in the examples described later.

The liquid humic substance according to the present embodiment may be diluted with water. According to the configuration, the liquid humic substance according to the present embodiment can be easier to use as a fertilizer. In this case, the content of water in the liquid humic substance according to the present embodiment is not particularly limited, as long as the amount thereof preferably provides a total organic carbon concentration of the diluted liquid humic substance according to the present embodiment of 0.1 to 100 mg/L, more preferably 0.5 to 50 mg/L, and further preferably 1 to 20 mg/L. The total organic carbon concentration of the liquid humic substance diluted with water can be measured by the method described in the examples described later.

### [Method of producing Liquid Humic Substance]

Embodiments of the method of producing a liquid humic substance according to the present invention will be described below. The method of producing a liquid humic substance of the present invention is not limited thereto, and various modifications can be made therein unless deviating from the substance thereof.

The method of producing a liquid humic substance of the present embodiment is a method of producing the liquid humic substance according to the present embodiment, and includes
(1) a step of adding 80 to 160 parts by mass of nitric acid on anhydrous basis to 100 parts by mass of low rank coal,
(2) a step of reacting a mixture obtained in the step (1) under condition of 70 to 95°C for 2 to 6 hours, so as to prepare a crude humic substance,
(3) a step of adding water and an alkali to the crude humic substance to regulate the crude humic substance to have a pH of 6 to 10,
(4) a step of adding water to make a solid-liquid ratio of 1/3 or more,
(5) a step of extracting under condition of a liquid temperature of 40 to 95°C for 0.5 to 24 hours, and
(6) a step of subjecting a humic substance extracted liquid obtained in the step (5) to solid-liquid separation, so as to provide the liquid humic substance.

In the step (3), for example, water is added to the crude humic substance to make a target solid-liquid ratio or less, then an alkali is added to make a pH of approximately 6 to 10, and then water is added to make a pH of 6 to 10 finally.

In the step (5), for example, the extraction operation is performed by retaining the crude humic substance having the prescribed solid-liquid ratio under condition of a temperature of 40 to 95°C for 0.5 to 24 hours, so as to provide a humic substance extracted liquid.

In the step (6), for example, the unreacted residue is separated from the humic substance crude extracted liquid through solid-liquid separation by centrifugal separation or filter press, so as to separate the liquid humic substance.

### (Production Method of Crude Humic Substance)

The low rank coal herein is coal having a smaller carbon content than bituminous coal and the like, and is defined as having a carbon content of 83% by mass or less. Examples of the low rank coal include peat coal, sub-bituminous coal, lignite coal, and low volatile bituminous coal, and one kind thereof or a mixture of two or more kinds thereof can be used.

80 to 160 parts by mass of nitric acid is used per 100 parts by mass of the low rank coal, which are reacted at 70 to 95°C for 2 to 6 hours, so as to provide a crude humic substance. The amount of nitric acid used is preferably 100 to 150 parts by mass, and more preferably 120 to 140 parts by mass, per 100 parts by mass of the low rank coal. The amount of nitric acid herein is a value converted to 100% nitric acid (100% HNO₃) (i.e., on anhydrous basis). The reaction temperature is preferably 75 to 90°C, and more preferably 75 to 85°C. The reaction time is preferably 3 to 6 hours, and more preferably 4 to 5 hours. Concentrated nitric acid is preferably used as nitric acid. The concentration of nitric acid is preferably 40 to 60% by mass, and more preferably 45 to 55 parts by mass, from the standpoint of the safety and the reactivity. The reaction can be started rapidly by heating to 70 to 95°C as a starter of reaction with a hot water bath or the like. From this standpoint, the temperature of heating is preferably 75 to 90°C, and more preferably 75 to 85°C.

### (Solid-liquid Ratio of Humic Substance Extracted Liquid)

The amount of the extraction solvent with respect to the amount of the low rank coal used as the raw material for preparing the crude humic substance is defined as the solid-liquid ratio. For example, in the case where 100 g (100 mL) of a solvent (water) is added to the crude humic substance prepared from 10 g of low rank coal, the solid-liquid ratio is 1/10.

### (Production Method of Liquid Humic Substance)

Water and an alkali are added to the crude humic substance to regulate the crude humic substance to have a pH of 6 to 10. For example, it is preferred that water is appropriately added to the crude humic substance, and while measuring the pH, an alkali is appropriately added to make a pH of 6 to 10, and preferably a pH of approximately 6.5 to 8. Examples of the alkali include a hydroxide and ammonia. Examples of the hydroxide include a hydroxide of an alkali metal and ammonium hydroxide. The hydroxide is preferably a hydroxide of an alkali metal. Examples of the hydroxide of an alkali metal include potassium hydroxide and sodium hydroxide. The hydroxide is preferably one or more kinds of potassium hydroxide, sodium hydroxide, and ammonium hydroxide (aqueous ammonia).

After regulating the pH, water is added to make the target solid-liquid ratio. The solid-liquid ratio is finally 1/3 or more, preferably 1/3 to 1/12, and more preferably 1/5 to 1/10.

It is possible that tests are performed in advance with varying amounts of the alkali added with respect to the crude humic substance, so as to determine the amount of the alkali added for the target pH of the liquid humic substance. The alkali added for regulating the pH in extraction can be selected depending on the purpose, and for example, can be potassium hydroxide, which can be used as a fertilizer component.

The materials are retained under condition of a liquid temperature of 40 to 95°C for 0.5 to 24 hours over a hot water bath or the like to extract the humic substance extracted liquid. In the case where the liquid temperature and the retention time are in the aforementioned ranges, the extracted liquid is not frozen, and the quality of the extracted liquid can be secured. From this standpoint, the liquid temperature is preferably 45 to 90°C, and more preferably 50 to 80°C, and the retention time is preferably 0.5 to 12 hours, and more preferably 1 to 6 hours. After the extraction, the humic substance extracted liquid is preferably cooled to 40°C or less. The unreacted residue is separated from the humic substance extracted liquid through solid-liquid separation by centrifugal separation, filter press, or the like. The supernatant obtained through solid-liquid separation is obtained as the liquid humic substance. The liquid humic substance of the present embodiment that is dehydrated to powder has high solubility in water, and the liquid humic substance can be used after powderizing through spray drying, freeze drying, or the like.

### Examples

The present invention will be specifically described with reference to examples below, but the present invention is not limited to the examples.

### [Confirmation of Presence of Humic Acid and Fulvic Acid in Humic Substance Solution]

The presence of the humic acid and the fulvic acid in the humic substance solution was confirmed by FT-IR (Fourier transform infrared spectroscopy) and ¹³C-NMR (carbon-13 nuclear magnetic resonance).

### <Measurement of FT-IR>

The humic substance solutions obtained in Examples and Comparative Examples each were subj ected to FT-IR measurement with a Fourier transform infrared spectrometer ("Frontier FT-IR", trade name, available from PerkinElmer, Inc.) (measurement method: KBr method, measurement range: 4,000 to 400 cm⁻¹, resolution: 8 cm⁻¹, number of scans: 32, measurement temperature: room temperature, reference: KBr).

The following literature was referred in the measurement.

Fukushima, M., S. Tanaka, H. Nakamura, and S, Ito: Acid- base characterization of molecular weight fractionated humic acid, Talanta, 43, 383-390 (1996)

The band at 3,400 cm⁻¹ is attributed to the OH stretching vibration and the NH stretching vibration, the band at 2,920 cm⁻¹ is attributed to the CH stretching vibration of an aliphatic moiety, the band at 1,720 cm⁻¹ is attributed to the C=O stretching vibration of COOH, the band at 1,610 cm⁻¹ is attributed to the antisymmetric stretching vibration of COO- or the C=C stretching vibration of an aromatic moiety, and the band at 1,230 cm⁻¹ is attributed to the CO stretching vibration or the bending vibration of COH of COOH and a phenol group.

### <Measurement of ¹³C-NMR Method>

The humic substance solutions obtained in Examples and Comparative Examples each were subjected to ¹³C-NMR measurement with a nuclear magnetic resonator ("Avance Neo 500 (Bruker)", trade name, available from Bruker Corporation) (magnetic field intensity: 11.74 T, measured nucleus: ¹³C, solvent: D₂O, reference: trimethylsilylpropanoic acid, measurement temperature: room temperature).

The following literature was referred in the measurement.

K.A. Thorn, D.W. Folan, P. MacCarthy (1989), Characterization of the International Humic Substances Society Standard and Reference Fulvic and Humic Acids by Solution State Carbon-13 (13C) and Hydrogen-1 (1H) Nuclear Magnetic Resonance Spectrometry, U.S. Geological Survey, Water-Resources Investigations Report 89-4196, Denver, CO, 93 pp.

The peak at 5 to 65 ppm is attributed to an aliphatic moiety, the peak at 65 to 110 ppm is attributed to an acetal and a heteroaliphatic moiety, the peak at 110 to 165 ppm is attributed to an aromatic moiety, the peak at 165 to 191 ppm is attributed to a carboxy group, and the peak at 191 to 220 ppm is attributed to a carbonyl group.

### [Measurement of pH]

The pH was measured by the glass electrode method. The solution in a suspension state containing the residue and the like of the crude humic substance (humic substance crude extracted liquid) was measured under stirring with a magnetic stirrer.

### [Total Organic Carbon Concentration]

The total organic carbon concentration (which is hereinafter referred to as TOC) of the humic substance solution is a value that is measured by the combustion catalytic oxidation method with a total organic carbon meter (TOC-L, available from Shimadzu Corporation). The present embodiment uses the TOC as an index, which can be quantitatively determined more easily than the complex quantitative determination method of humic substances (such as the International Humic Substances Society method, see NPL 3). There is a strong correlation between the TOC and the humic substance amount obtained by the quantitative determination method of humic substances. While depending on the kind of lignite coal used as the raw material, and the like, the humic substance amount can be estimated as 1.4 to 1.8 times the TOC. After regulating the pH of the liquid humic substance to 1 by adding hydrochloric acid, the liquid humic substance was subjected to centrifugal separation at 5,000 ×g for 10 minutes, so as to form a precipitated part from the liquid humic substance, and then the TOC of the supernatant (soluble part) excluding the precipitated part was measured. The TOC of the precipitated part was calculated by subtracting the TOC measured value of the soluble part from the TOC measured value of the liquid humic substance.

### [Cultivation Test]

Tomato seedlings with uniform growth (available from Takii & Co., Ltd., "CF Momotaro Fight", 2 weeks after sowing) were prepared in polyethylene seedling pots.

The liquid humic substance was diluted with water to make a TOC concentration of 10 mg/L, thereby producing a diluted liquid humic substance. 200 mL of the diluted liquid humic substance was fed one pot of tomato seedlings every day. Two weeks after and four weeks after the application of the liquid humic substance, the shoots of five seedlings randomly selected were collected, and the total mass of three seedlings showing average growth excluding the largest and smallest seedlings was measured.

For comparison, a cultivation area in which tomato seedlings were cultivated with no liquid humic substance fed thereto was provided as a control area. In the control area, two weeks after and four weeks after, the shoots of five seedlings randomly selected were collected, and the total mass of three seedlings showing average growth excluding the largest and smallest seedlings was measured (Reference Example).

### [Example 1]

In a draft chamber, 20 g of lignite coal having a carbon content of 77% by mass was placed in a 500 mL beaker, to which 41.7 g of nitric acid having a concentration of 48% by mass (100 parts by mass of 100% nitric acid per 100 parts by mass of low rank coal) was added. The oxidation reaction was performed over a water bath at 80°C for 3 hours. A crude humic substance obtained through the procedure was subjected to the following extraction operation.

Approximately 80 mL of water was added to the crude humic substance, to which 8 g of potassium hydroxide was added, followed by stirring. A 1.0 mol/L potassium hydroxide aqueous solution was appropriately added under stirring while monitoring with a pH meter to make a pH of 6.5. After measuring up to a total amount of 200 mL with water (resulting in a solid-liquid ratio of 1/10), the extraction operation was performed at 80°C for 1 hour.

The crude extracted liquid was allowed to be 40°C or less, and after supplementing evaporated water to make a total amount of 200 mL, was subjected to centrifugal separation at 3,500 ×g for 20 minutes. The resulting liquid humic substance was appropriately diluted, and the TOC of the liquid humic substance, the TOC of the precipitated part, the TOC of the soluble part, and the pH of the liquid humic substance were measured by the measurement methods described above. The results are shown in Table 1.

### [Example 2]

The same procedure as in Example 1 was performed except that the oxidation reaction was performed after adding 54.2 g of nitric acid having a concentration of 48% by mass (130 parts by mass of 100% nitric acid per 100 parts by mass of low rank coal), and in the extraction, 8 g of potassium hydroxide was added, and the pH was allowed to be 6.5 by using a 1.0 mol/L potassium hydroxide aqueous solution while monitoring with a pH meter.

### [Example 3]

The oxidation reaction was performed after adding 54.2 g of nitric acid having a concentration of 48% by mass (130 parts by mass of 100% nitric acid per 100 parts by mass of low rank coal), and in the extraction, 8 g of potassium hydroxide was added, and the pH was allowed to be 6.5 by using a 1.0 mol/L potassium hydroxide aqueous solution while monitoring with a pH meter. After measuring up to a total amount of 100 mL with water (resulting in a solid-liquid ratio of 1/5), the extraction operation was performed at 80°C for 1 hour. The other procedure performed was the same as in Example 1.

### [Example 4]

The same procedure as in Example 1 was performed except that the oxidation reaction was performed after adding 66.7 g of nitric acid having a concentration of 48% by mass (160 parts by mass of 100% nitric acid per 100 parts by mass of low rank coal), and in the extraction, 8 g of potassium hydroxide was added, and the pH was allowed to be 6.5 by using a 1.0 mol/L potassium hydroxide aqueous solution while monitoring with a pH meter.

### [Example 5]

The same procedure as in Example 1 was performed except that the oxidation reaction was performed after adding 54.2 g of nitric acid having a concentration of 48% by mass (130 parts by mass of 100% nitric acid per 100 parts by mass of low rank coal), and in the extraction, 10 g of potassium hydroxide was added, and the pH was allowed to be 10.0 by using a 1.0 mol/L potassium hydroxide aqueous solution while monitoring with a pH meter.

### [Example 6]

The same procedure as in Example 1 was performed except that the oxidation reaction was performed after adding 33.4 g of nitric acid having a concentration of 48% by mass (80 parts by mass of 100% nitric acid per 100 parts by mass of low rank coal), and in the extraction, 8 g of potassium hydroxide was added, and the pH was allowed to be 6.5 by using a 1.0 mol/L potassium hydroxide aqueous solution while monitoring with a pH meter.

### [Comparative Example 1]

In a draft chamber, 20 g of lignite coal having a carbon content of 77% by mass was placed in a 500 mL beaker, to which 41.7 g of nitric acid having a concentration of 48% by mass (100 parts by mass of 100% nitric acid per 100 parts by mass of low rank coal) was added. The oxidation reaction was performed over a water bath at 80°C for 1 hour. A crude humic substance obtained through the procedure was subjected to the following extraction operation.

Approximately 80 mL of water was added to the crude humic substance, to which 10 g of potassium hydroxide was added, followed by stirring. A 1.0 mol/L potassium hydroxide aqueous solution was appropriately added under stirring while monitoring with a pH meter to make a pH of 6.5. After measuring up to a total amount of 200 mL with water (resulting in a solid-liquid ratio of 1/10), the extraction operation was performed at 80°C for 1 hour.

The crude extracted liquid was allowed to be 40°C or less, and after supplementing evaporated water to make a total amount of 200 mL, was subjected to centrifugal separation at 3,500 ×g for 20 minutes. The resulting humic substance extracted liquid was appropriately diluted, and the TOC of the liquid humic substance, the TOC of the precipitated part, the TOC of the soluble part, and the pH of the liquid humic substance were measured by the measurement methods described above. The results are shown in Table 1.

### [Comparative Example 2]

The same procedure as in Example 1 was performed except that the oxidation reaction was performed after adding 29.1 g of nitric acid having a concentration of 48% by mass (70 parts by mass of 100% nitric acid per 100 parts by mass of low rank coal), and in the extraction, 8 g of potassium hydroxide was added, and the pH was allowed to be 6.5 by using a 1.0 mol/L potassium hydroxide aqueous solution while monitoring with a pH meter.

### [Comparative Example 3]

The oxidation reaction was performed after adding 54.2 g of nitric acid having a concentration of 48% by mass (130 parts by mass of 100% nitric acid per 100 parts by mass of low rank coal), and in the extraction, 8 g of potassium hydroxide was added, and the pH was allowed to be 6.5 by using a 1.0 mol/L potassium hydroxide aqueous solution while monitoring with a pH meter. After measuring up to a total amount of 50 mL with water (resulting in a solid-liquid ratio of 1/2.5), the extraction operation was performed at 80°C for 1 hour. The other procedure performed was the same as in Example 1.

### [Comparative Example 4]

The same procedure as in Example 1 was performed except that the oxidation reaction was performed after adding 83.4 g of nitric acid having a concentration of 48% by mass (200 parts by mass of 100% nitric acid per 100 parts by mass of low rank coal), and in the extraction, 8 g of potassium hydroxide was added, and the pH was allowed to be 6.5 by using a 1.0 mol/L potassium hydroxide aqueous solution while monitoring with a pH meter.

### [Comparative Example 5]

The same procedure as in Example 1 was performed except that the oxidation reaction was performed after adding 54.2 g of nitric acid having a concentration of 48% by mass (130 parts by mass of 100% nitric acid per 100 parts by mass of low rank coal), and in the extraction, 3 g of potassium hydroxide was added, and the pH was allowed to be 2.0 by using a 1.0 mol/L potassium hydroxide aqueous solution while monitoring with a pH meter.

### [Comparative Example 6]

The same procedure as in Example 1 was performed except that the oxidation reaction was performed after adding 54.2 g of nitric acid having a concentration of 48% by mass (130 parts by mass of 100% nitric acid per 100 parts by mass of low rank coal), and in the extraction, 5 g of potassium hydroxide was added, and the pH was allowed to be 5.0 by using a 1.0 mol/L potassium hydroxide aqueous solution while monitoring with a pH meter.

### [Example 7]

A liquid humic substance of Example 7 was produced by mixing the liquid humic substance of Comparative Example 1 and the liquid humic substance of Comparative Example 5 to make a TOC of the precipitated part of 2,500 mg/L and a TOC of the soluble part of 2,500 mg/L.

### [Comparative Example 7]

A liquid humic substance of Comparative Example 7 was produced by mixing the liquid humic substance of Comparative Example 1 and the liquid humic substance of Comparative Example 5 to make a TOC of the precipitated part of 2,500 mg/L and a TOC of the soluble part of 3,000 mg/L.

**Table 1**

| | Production method | | | | Characteristics | | | | | | Cultivation test | | | |
|---|---|---|---|---|---|---|---|---|---|---|---|---|---|---|
| | | | | | | | | | | | Measured value | | Ratio with respect to 100 for control area | |
| No. | Nitric acid mixing ratio | Reaction time | pH in extraction | Solid-liquid ratio in extraction | TOC of liquid humic substance (mg/L) | pH of liquid humic substance | TOC (A) of precipitated part (mg/L) | TOC (B) of soluble part (mg/L) | B/A × 100 | A+B (mg/L) | Mass of shoots two weeks after application (g) | Mass of shoots four weeks after application (g) | Mass of shoots two weeks after application | Mass of shoots four weeks after application |
| Example 1 | 1.0 | 3 | 6.5 | 1/10 | 56,200 | 6.5 | 40,500 | 15,700 | 39 | 56,200 | 17.3 | 80.2 | 111 | 126 |
| Example 2 | 1.3 | 3 | 6.5 | 1/10 | 57,800 | 6.5 | 39,600 | 18,200 | 46 | 57,800 | 18.2 | 82.2 | 117 | 129 |
| Example 3 | 1.3 | 3 | 6.5 | 115 | 121,000 | 6.5 | 84,700 | 36,300 | 43 | 121,000 | 17.2 | 79.1 | 110 | 124 |
| Example 4 | 1.6 | 3 | 6.5 | 1/10 | 89,000 | 6.5 | 50,200 | 38,800 | 77 | 89,000 | 17.9 | 79.8 | 115 | 125 |
| Example 5 | 1.3 | 3 | 10 | 1/10 | 66,900 | 10 | 46,500 | 20,400 | 44 | 66,900 | 18.5 | 83.5 | 119 | 131 |
| Example 6 | 0.8 | 3 | 6.5 | 1/10 | 45,600 | 6.5 | 37,100 | 8,500 | 23 | 45,600 | 17.7 | 78.2 | 113 | 123 |
| Example 7 | - | - | - | - | 5,000 | 6.5 | 2,500 | 2,500 | 100 | 5,000 | 17.7 | 78.5 | 113 | 123 |
| Comparative Example 1 | 1.0 | 1 | 6.5 | 1/10 | 37,000 | 6.5 | 34,200 | 2,800 | 8 | 37,000 | 16.2 | 69.5 | 104 | 109 |
| Comparative Example 2 | 0.7 | 3 | 6.5 | 1/10 | 41,500 | 9.6 | 36,600 | 4,900 | 13 | 41,500 | 16.1 | 71.4 | 103 | 112 |
| Comparative Example 3 | 1.3 | 3 | 6.5 | 1/2.5 | - | 6.5 | unable to extract | unable to extract | - | - | unable to perform | unable to perform | unable to perform | unable to perform |
| Comparative Example 4 | 2.0 | 3 | 6.5 | 1/10 | - | 6.5 | unable to control reaction | unable to control reaction | - | - | unable to perform | unable to perform | unable to perform | unable to perform |
| Comparative Example 5 | 1.3 | 3 | 2.0 | 1/10 | 17,200 | 2 | 200 | 17,000 | 8500 | 17,200 | 18.1 | 70 | 116 | 110 |
| Comparative Example 6 | 1.3 | 3 | 5.0 | 1/10 | 20,700 | 5 | 2,200 | 18,500 | 841 | 20,700 | 17.8 | 74.1 | 114 | 116 |
| Comparative Example 7 | - | - | - | - | 5,500 | 6.5 | 2,500 | 3,000 | 120 | 5,500 | 17.9 | 75.4 | 115 | 118 |
| Reference Example (control area) | - | - | - | - | - | - | - | - | - | - | 15.6 | 63.7 | 100 | 100 |

The nitric acid mixing ratio is shown in terms of part by mass of 100% nitric acid per 1 part by mass of the low rank coal.

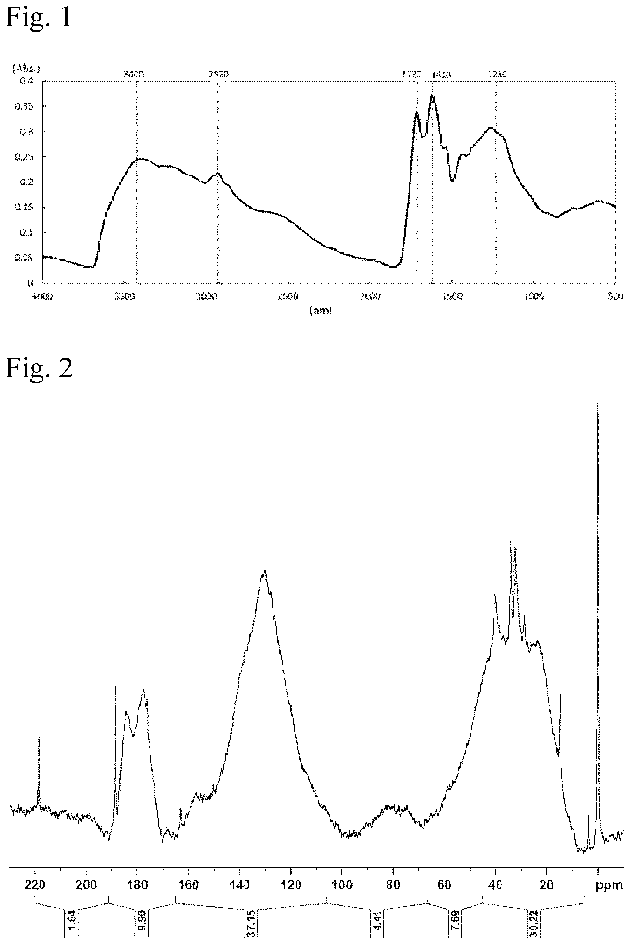

In all the liquid humic substances of Examples and Comparative Examples, the presence of a humic acid and a fulvic acid was confirmed by the FT-IR and ¹³C-NMR methods. For reference, the FT-IR spectrum of the liquid humic substance of Example 1 is shown in Fig. 1, and the ¹³C-NMR spectrum of the liquid humic substance of Example 1 is shown in Fig. 2.

As shown by the results in Table 1, it has been found that the use of each of the liquid humic substances of Examples 1 to 7 having a total organic carbon concentration A mg/L of the precipitated part and a total organic carbon concentration B mg/L of the soluble part that provide a value of B/A × 100 of 15 to 100 can promote growth of tomato. On the other hand, it has also been found that the use of each of the liquid humic substances of Comparative Examples 1, 2, 5, and 6 having a value of B/A × 100 of less than 15 or more than 100 results in insufficient growth of tomato, as compared to the liquid humic substances of Examples 1 to 7. It has been found from the results of Example 7 that a liquid humic substance having an excellent growth promotion effect on tomato can be obtained by mixing the multiple liquid humic substances resulting in insufficient growth of tomato to allow the value of B/A × 100 of the liquid humic substance to be within a range of 15 to 100. It has been found that a fulvic acid has a short-term growth effect, and a humic acid has a long-term growth effect since the use of the liquid humic substance of Comparative Example 5 results in poor growth four weeks after the application of the liquid humic substance irrespective of good growth two weeks after the application of the liquid humic substance. In Comparative Example 3 for investigating the solid-liquid ratio in extraction, the humic substance having a high concentration is gelled due to the small amount of the solvent, disabling the centrifugal operation, and a liquid humic substance cannot be produced. In Comparative Example 4 for investigating the mixing ratio of nitric acid, vigorous oxidative decomposition reaction of the low rank coal occurs with nitric acid, disabling control of foaming and heat generation associated with the oxidation reaction, and a liquid humic substance cannot be produced.

The total organic carbon concentration of the precipitated part is substantially the same as the total organic carbon concentration of the humic acid, and the total organic carbon concentration of the soluble part is substantially the same as the total organic carbon concentration of the fulvic acid. Therefore, the value of B/A is substantially the same as the value of D/C, and the value of the total total organic carbon concentration of the total organic carbon concentration of the humic acid and the total organic carbon concentration of the fulvic acid (C + D) is substantially the same as the total total organic carbon concentration of the total organic carbon concentration of the precipitated part and the total organic carbon concentration of the soluble part (A + B).

## Claims

1. A liquid humic substance having,
in separating the liquid humic substance into a precipitated part and a soluble part by regulating the liquid humic substance to have a pH of 1 by adding hydrochloric acid, a total organic carbon concentration A mg/L of the precipitated part and a total organic carbon concentration B mg/L of the soluble part that provide a value of B/A × 100 of 15 to 100.

2. A liquid humic substance comprising a humic acid and a fulvic acid, and having,
in separating the liquid humic substance into a precipitated part containing the humic acid and a soluble part containing the fulvic acid by regulating the liquid humic substance to have a pH of 1 by adding hydrochloric acid, a total organic carbon concentration A mg/L of the precipitated part and a total organic carbon concentration B mg/L of the soluble part that provide a value of B/A × 100 of 15 to 100.

3. A liquid humic substance comprising a humic acid and a fulvic acid, and having
a total organic carbon concentration C mg/L of the humic acid and a total organic carbon concentration D mg/L of the fulvic acid that provide a value of D/C × 100 of 15 to 100.

4. The liquid humic substance according to claim 2 or 3, wherein the liquid humic substance has a total total organic carbon concentration of the total organic carbon concentration of the humic acid and the total organic carbon concentration of the fulvic acid of 4,000 to 150,000 mg/L.

5. The liquid humic substance according to any one of claims 2 to 4, wherein the liquid humic substance has a total organic carbon concentration of the humic acid of 2,000 to 148,000 mg/L.

6. The liquid humic substance according to any one of claims 2 to 5, wherein the liquid humic substance has a total organic carbon concentration of the fulvic acid of 2,000 to 50,000 mg/L.

7. The liquid humic substance according to any one of claims 1 to 6, wherein the liquid humic substance has a pH of 6 to 10.

8. The liquid humic substance according to any one of claims 1 to 7, wherein the liquid humic substance is diluted with water.

9. A method of producing the liquid humic substance according to any one of claims 1 to 7, comprising
(1) a step of adding 80 to 160 parts by mass of nitric acid on anhydrous basis to 100 parts by mass of low rank coal,
(2) a step of reacting a mixture obtained in the step (1) under condition of 70 to 95°C for 2 to 6 hours, so as to prepare a crude humic substance,
(3) a step of adding water and an alkali to the crude humic substance to regulate the crude humic substance to have a pH of 6 to 10,
(4) a step of adding water to make a solid-liquid ratio of 1/3 or more,
(5) a step of extracting under condition of a liquid temperature of 40 to 95°C for 0.5 to 24 hours, and
(6) a step of subjecting a humic substance extracted liquid obtained in the step (5) to solid-liquid separation, so as to provide the liquid humic substance.
